# EUROPÄISCHE PATENTSCHRIFT

(11) **EP 4 490 411 B1**
(45) Veröffentlichungstag und Bekanntmachung des Hinweises auf die Patenterteilung: **15.04.2026**
(21) Anmeldenummer: 23707946.2
(22) Anmeldetag: 01.03.2023
(51) Int. Cl.: F16C 25/06, F16C 19/54, F16C 33/66

(54) **EINSTELLBARE LAGERANORDNUNG, INSBESONDERE FÜR WINDKRAFTANLAGEN**
ADJUSTABLE BEARING ARRANGEMENT, ESPECIALLY FOR WIND TURBINES
DISPOSITIF DE PALIER RÉGLABLE, EN PARTICULIER POUR ÉOLIENNES

(30) Priorität: 07.03.2022 EP 22160450
(43) Veröffentlichungstag der Anmeldung: 15.01.2025
(73) Patentinhaber: Flender GmbH, 46395 Bocholt (DE)
(72) Erfinder: KÖNIG, Christian, 46395 Bocholt (DE); DEGELING, Markus, 46395 Bocholt (DE); BRÖCKER, Sarah, 46395 Bocholt (DE); TE WILDE, David, 46395 Bocholt (DE)
(74) Vertreter: Michalski Hüttermann & Partner Patentanwälte mbB
(86) Internationale Anmeldenummer: PCT/EP2023/055068
(87) Internationale Veröffentlichungsnummer: WO 2023/169887

(56) Entgegenhaltungen:
- EP-A1- 2 679 867
- DE-C2- 10 126 103
- DE-C2- 3 028 106
- US-A1- 2020 362 917
- US-A1- 2021 156 429

## Beschreibung

Die Erfindung betrifft eine Lageranordnung, mit einem ersten Wälzlager mit einem Innenring und einem Außenring, einem zweiten Wälzlager mit einem Innenring und einem Außenring, einem zwischen den Innenringen der Wälzlager einsitzenden ersten Distanzelement und einem zur Einstellung einer Lagervorspannung zwischen den Außenringen der Wälzlager einsitzenden zweiten Distanzelement.

Eine Lageranordnung ist in der EP 3 650 689 A1 gezeigt. Lageranordnungen werden im Getriebebau eingesetzt und werden insbesondere im Bereich von Antriebssträngen von Windkraftanlagen steigenden Anforderung ausgesetzt. Dies betrifft sowohl die Belastungen während des Betriebs als auch das Erfordernis bzgl. der Montage und der Einstellung, nämlich diese schnell und präzise zu bewerkstelligen. Es existieren indirekte Einstellungsverfahren für Lageranordnungen, die allerdings mit hohen Unsicherheiten einhergehen. Darüber hinaus sind axiale Vorspannungen von Lageranordnungen nicht in Form von geometrischen Maßen unmittelbar messbar. Es ist üblich eine zu erzielende Vorspannung vorzugeben und davon ausgehend die axiale Breite der Distanzelemente zwischen den Lagerringen zu berechnen, die Distanzringe wie berechnet zu fertigen und anschließend die Lager einschließlich der Distanzelemente zu montieren. Hierbei kann nicht immer gewährleistet werden, dass die vorgegebene Vorspannung erzielt wird. Auch die EP 2 679 867 A1 und US 2020/362917 A1 zeigen Lageranordnungen für Windkraftanlagen.

Die Einstellung der Lagervorspannung erfolgt über das Anpassen der axialen Breite des inneren Distanzelements im Verhältnis zur axialen Breite des äußeren Distanzelements. Für die Berechnung der einzustellenden axialen Breitenmaße der Distanzringe wird eine Vielzahl an Messwerten benötigt. Infolge der fertigungstechnisch prinzipbedingt vorhandenen Toleranzen der Messwerte kann ein seriensicherer Montageprozess von Lageranordnungen in dem beschriebenen Bereich nicht gewährleistet werden, da die geforderte Genauigkeit der Einstellung nicht erreicht wird.

Es besteht deshalb ein ständiges Bedürfnis an einer leistungsfähigen Lageranordnung, die präzise einstellbar, schnell montierbar und kosteneffizient in der Herstellung ist. Der Erfindung liegt die Aufgabe zugrunde, eine technische Möglichkeit bereitzustellen, die in zumindest einem der genannten Aspekte eine Verbesserung bietet.

Die Lösung der Aufgabe erfolgt durch eine Lageranordnung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Lageranordnung, umfassend ein erstes Wälzlager mit einem Innenring und einem Außenring, ein zweites Wälzlager mit einem Innenring und einem Außenring, ein zwischen den Innenringen der Wälzlager einsitzendes erstes Distanzelement und ein zur Einstellung einer Lagervorspannung zwischen den Außenringen der Wälzlager einsitzendes und aus zumindest zwei umfänglich gegeneinandergesetzten Bogenstücken bestehendes zweites Distanzelement, wobei das zweite Distanzelement unter Bildung eines Radialspaltes zu dem ersten Distanzelement in radialer Richtung erstreckt und in dem ersten und zweiten Distanzelement ein in radialer Richtung verlaufender Ölversorgungskanal gebildet ist.

Die Distanzringe können ringförmig ausgebildet sein. Insbesondere der erste bzw. der innere Distanzring kann als Hülse ausgeführt sein, wobei er mit einer Passung auf der Welle sitzen kann. Die beiden Innenringe der Lager werden im Verbund mit dem ersten Distanzelement durch ein Sicherungselement axial gegen die Welle verspannt. Die Lagerinnenringe sitzen bevorzugt mit einer Passung auf der Welle. Sowohl die Passung, als auch die axiale Verspannung über das Sicherungselement sollen in einem regulären Betrieb eine Relativdrehung der Lagerringe gegenüber der Welle verhindern.

Das zweite Distanzelement ist mehrteilig aufgebaut. Die Einzelteile können zu dem einsatzbereiten Distanzelement zusammengesetzt werden. Die Einzelteile können untereinander identisch oder verschieden zueinander ausgeführt sein. Zumindest unterscheiden sich die mehreren Einzelteile durch ihre umfängliche Position innerhalb der Lageranordnung in deren endmontierten Zustand. Die Einzelteile sind als Bogenstücke ausgeführt, wobei mit dem Begriff Bogen der mathematische Begriff Kreisbogen gemeint ist, so dass ein jedes Bogenstück auf einem Bogenmaß eines Umfangs der Lageranordnung liegt. Bevorzugt lassen sich die mehreren Einzelteile eines zweiten Distanzelements zu einem umfänglich geschlossenen Ring zusammensetzen. Bevorzugt ist, wenn das zweite Distanzelement aus zwei Bogenstücken zusammengesetzt ist. Ein jedes der Bogenstücke umschließt dann zweckmäßigerweise 180° des Umfangs. Alternativ kann der Distanzring auch aus drei oder mehr Bogenstücken zusammengesetzt sein. Auch hier bietet sich zunächst eine über den Umfang gleichmäßige Aufteilung an. Es kann allerdings auch vorteilhaft und in gewissen Anordnungen zweckmäßig sein, wenn eine ungleichmäßige umfängliche Aufteilung der Bogenstücken eines Distanzelements vorgesehen ist.

Das zweite Distanzelement weist ein axiales Breitenmaß auf, so dass sich zumindest mittelbar über das zweite Distanzelement eine Lagervorspannung eingestellt wird. Das axiale Breitenmaß des zweiten Distanzelements kann dazu herangezogen werden, eine zu erzielende Lagervorspannung endgültig einstellen und zwar nachdem die Lageranordnung zumindest einmal vorläufig montiert worden ist. Infolge der vorläufigen Montage sind aus den toleranzbehafteten Maßen endgültige Montagemaße geworden, die in einem einfach zu erfassenden Messwert münden. Bei diesem Messwert kann es sich beispielsweise um ein Axialspiel der vorläufig montierten Lageranordnung handeln, wobei dieser erfasste Messwert Eingang in eine Ermittlung oder Berechnung eines endgültigen axialen Breitenmaßes des zweiten Distanzelements finden kann.

Die beiden Distanzelemente können in einer radialen Richtung den axialen Zwischenraum zwischen den beiden Lagern zumindest zu einem Großteil ausfüllen. Hierbei kann in konkreter Ausgestaltung vorgesehen sein, dass sich das zweite Distanzelement ausgehend von einem Umfangsbereich der Außenringe nach radial innen erstreckt. Während sich das innere, erste Distanzelement lediglich innerhalb der radialen Höhe der Lagerinnenringe erstreckt, reicht das äußere, zweite Distanzelement sowohl nach innen über die Lageraußenringe hinaus, als auch in den Umfangsbereich der Wälzkörper.

In einer bevorzugten Ausgestaltung der Lageranordnung ist vorgesehen, dass der in radialer Richtung verlaufende Ölversorgungskanal zumindest eine Ölaustrittsbohrung aufweist. Hierdurch ist es möglich, den Wälzkörpern in den Bereichen, in dem die größten Axialkräfte herrschen, gezielt Schmieröl zuzuführen. Bevorzugt kann das zweite Distanzelement mehrere axial verlaufende und über den Umfang ausgebildete Durchbrüche ausbilden.

Der zwischen dem ersten und dem zweiten Distanzelement gebildete Radialspaltes so schmal gehalten sein, dass das durch die Öldurchgangsbohrung von dem zweiten zu dem ersten Distanzelement geleitete Schmieröl an dem Spalt nur einen geringen Druckverlust erfährt. Sollte es erforderlich sein, den Druckverlust weitestgehend zu vermeiden, dann kann in dem Spalt zusätzlich eine Spaltdichtung integriert sein.

In einer bevorzugten Ausgestaltung der Lageranordnung ist vorgesehen, dass das zweite Distanzelement außenumfänglich eine erste Nut ausbildet, zur Aufnahme eines mit einem umgebenden Gehäuse formschlüssig verbundenen Sicherungselements. Hierdurch ist es möglich, ein Mitdrehen der Lageraußenringe mit der Welle bzw. eine Relativdrehung zwischen den Lageraußenringen und dem umgebenden Gehäuse zumindest zu erschweren. Zur Vermeidung einer derartigen Relativdrehung ist besonders bevorzugt vorgesehen, dass das zweite Distanzelement außenumfänglich eine zweite Passfedernut ausbildet, zur Aufnahme einer mit zumindest einem der Außenringe formschlüssig verbundenen Passfeder.

In einer bevorzugten Ausgestaltung der Lageranordnung ist vorgesehen, dass die zumindest zwei umfänglichen Bogenstücken gegeneinander verschraubt und/oder über Passstifte verbunden sind. Über eine Verschraubung oder eine Verstifftung der Bogenstücke miteinander lässt sich die Maßgenauigkeit steigern.

Zudem können das erste und/oder zweite Wälzlager als Axial-Kegelrollenlager, als Kegelrollenlager, als Schrägkugellager, oder als Axial-Pendelrollenlager ausgebildet sein. Derartige Wälzlager erlauben es in vorteilhafter Weise, eine Axialbeanspruchung auf den Außenring oder Innenring als Druckbeanspruchung in die schräggestellten Wälzkörper einzuleiten und in den Innenring bzw. Außenring weiterzuleiten. Dadurch ist die auf die Lageranordnung ausgeübte Axialkraft dauerhaft und zuverlässig vom Innenring auf den Außenring oder umgekehrt weiterleitbar. Insbesondere sind das erste und das zweite Wälzlager in einer O-Anordnung zueinander angeordnet.

Die Aufgabe wird ferner gelöst durch ein Verfahren zur Montage einer wie beschriebenen Lageranordnung zwischen einem Gehäuse und einer Welle, bei dem eine vorläufige Montage der mit der Lageranordnung bestückten Welle innerhalb des Gehäuses erfolgt, ein Maß eines Axialspiels zwischen Welle und Gehäuse bestimmt wird und nach Demontage der Welle aus dem Gehäuse eine endgültige Montage der mit der Lageranordnung bestückten Welle innerhalb des Gehäuses erfolgt, wobei das zweite Distanzelement der Lageranordnung gegenüber der vorläufigen Montage ein um das bestimmte Maß des Axialspiels erhöhtes axiales Breitenmaß aufweist.

Das Montageverfahren teilt sich in einen ersten Schritt der vorläufigen Montage einschließlich Axialspielmessung und einen zweiten Schritt der endgültigen Montage mit Einstellung der zu erzielenden Vorspannung auf. Dem Verfahren liegt der Gedanke zugrunde, dass durch die vorläufige Montage der Lageranordnung die Toleranzbereiche von einigen Bauteilmaßen auf ihre faktischen Werte eingegrenzt werden. Dies bedeutet, dass diese Bauteilmaße nicht mehr mit ihrem jeweiligen Toleranzbereich in die Bestimmung des endgültigen axialen Breitenmaßes des zweiten Distanzelements eingehen. Vielmehr gehen diese Bauteilmaße mit ihren faktischen Werten in das Maß des Axialspiels ein, welches dann einen messbaren Werten darstellt, wobei der dann gemessene Werte des Axialspiels mit einem einzigen Messtoleranzbereich vorliegt. Für die Ermittlung des endgültigen axialen Breitenmaßes des zweiten Distanzelements wird nun das ermittelte Maß des Axialspiels herangezogen. In einer bevorzugten Ausgestaltung des Verfahrens wird das Maß des Axialspiels zumindest um ein Toleranzmaß eines Gehäuseinnendurchmesser und/oder um ein Toleranzmaß eines Lageraußenringdurchmessers korrigiert. Dies bedeutet insbesondere, dass sich das endgültige axiale Breitenmaß des zweiten Distanzelements aus lediglich wenigen toleranzbehafteten Maßen ergibt, da, wie zuvor beschrieben, der Toleranzeinfluss diverser Bauteilmaße ausgeschaltet wurde.

Die Aufgabe wird ferner gelöst durch einen Antriebsstrang für eine Windkraftanlage, umfassend eine Wellenbaugruppe zur drehmomentübertragenden Verbindung eines Mehrblattrotors mit einem Generator, wobei die Hohlwellenbaugruppe ein Gehäuse und eine in dem Gehäuse drehbar gelagerte Hohlwelle aufweist und die Hohlwelle über eine Lageranordnung wie beschrieben in dem Gehäuse gelagert ist.

Der Antriebsstrang kann für eine Windkraftanlage vorgesehen sein, die als sogenannter Mittelschnellläufer ausgelegt ist. Die Hohlwellenbaugruppe umfasst strukturell ein Gehäuse, eine axial kurzbauende Hohlwelle und die beschriebene Lageranordnung, die die Hohlwelle innerhalb des Gehäuses drehend lagert. Die Hohlwellenbaugruppe kann ein antriebsseitig vorgesehenes Getriebe mit einem abtriebsseitig vorgesehenen Generator drehmomentübertragend verbinden. Das Getriebe kann zumindest eine Planetenstufe umfassen, wobei zweckmäßigerweise ein abtreibendes Sonnenrad mit der Hohlwelle antriebsverbunden ist. Der Generator kann gehäuseseitig mit dem Gehäuse der Hohlwellenbaugruppe verbunden sein. Die Generatorläufer kann mit der Hohlwelle der Hohlwellenbaugruppe antriebsverbunden sein. Bei einer derartigen Konfiguration mit der beschriebenen Lageranordnung kann vorteilhafterweise auf eine eigene Lagerung des Generatorläufers innerhalb des Generatorgehäuses verzichtet werden. Die Lagerung des Generatorläufers kann über die Hohlwellenbaugruppen erfolgen, insbesondere über die beschriebene Lageranordnung zwischen der Welle und dem Gehäuse der Hohlwellenbaugruppe. Insbesondere bei der Gestaltung des Antriebsstrangs für Mittelschnellläufer kann die Hohlwellenbaugruppe als ein Ersatz für eine Kupplung vorgesehen sein, die gemeinhin zwischen Getriebe und Generator angeordnet ist.

Die Aufgabe wird ferner gelöst durch eine Windkraftanlage, umfassend eine Gondel, an der drehbar ein Mehrblattrotor und ein Generator angebracht sind, wobei der Mehrblattrotor drehmomentübertragend über einen Antriebsstrang mit dem Generator verbunden ist und der Antriebsstrang wie zuvor beschrieben ausgebildet ist. Der Antriebsstrang ist in der Gondel aufgenommen und ist gemäß einer bereits beschriebenen Ausführungsformen des Antriebsstrang oder der hierin zum Einsatz kommenden Lageranordnung ausgebildet.

Ferner ist ein Computerprogrammprodukt zum Simulieren eines Betriebsverhaltens einer in einer Windkraftanlage eingesetzten Lageranordnung offenbart, wobei die Lageranordnung gemäß einer zuvor beschriebenen Ausführungsform ausgebildet ist. Dazu kann das Computerprogrammprodukt Daten zur Kinematik der Wälzlager und/oder der Hohlwelle umfassen. Ferner kann das Computerprogrammprodukt Simulationsroutinen umfassen, die dazu ausgebildet sind, basierend auf Angaben zum vorliegenden Betriebszustand, beispielsweise einer Drehzahl, eines Drehmoments, einer Schmierstofftemperatur, einer Umgebungstemperatur, einer Axialbeanspruchung, einer Radialbeanspruchung und Verbindung mit Abmessungen der Wälzlager, des Distanzelements, deren Verhalten zu simulieren. Dies kann ein Biegeverhalten, ein Ermüdungsverhalten, eine Veränderung einer axialen Vorspannkraft, ein thermisches Verhalten und/oder ein Vibrationsverhalten umfassen. Das Computerprogrammprodukt kann auch eine Datenschnittstelle aufweisen, über die die Angaben zum vorliegenden Betriebszustand vorgebbar sind. Ebenso kann das Computerprogrammprodukt auch eine Datenschnittstelle zum Ausgeben von Simulationsergebnissen aufweisen. Darüber sind Resultate des Computerprogrammprodukts an andere simulationsgerichtete Computerprogrammprodukte ausgebbar. Erfindungsgemäß ist die Lageranordnung, deren Betriebsverhalten mittels des Computerprogrammprodukts simulierbar ist, gemäß mindestens einer der oben skizzierten Ausführungsformen ausgebildet.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: einen Längsschnitt durch eine Lageranordnung,
Fig. 2, 3: Detaillierungen eines Distanzelements einer Lageranordnung nach Figur 1 in perspektivischer Ansicht;
Fig. 4: einen weiteren Längsschnitt durch die Lageranordnung nach Figur 1 und
Fig. 5: eine perspektivische Darstellung einer Windkraftanlage.

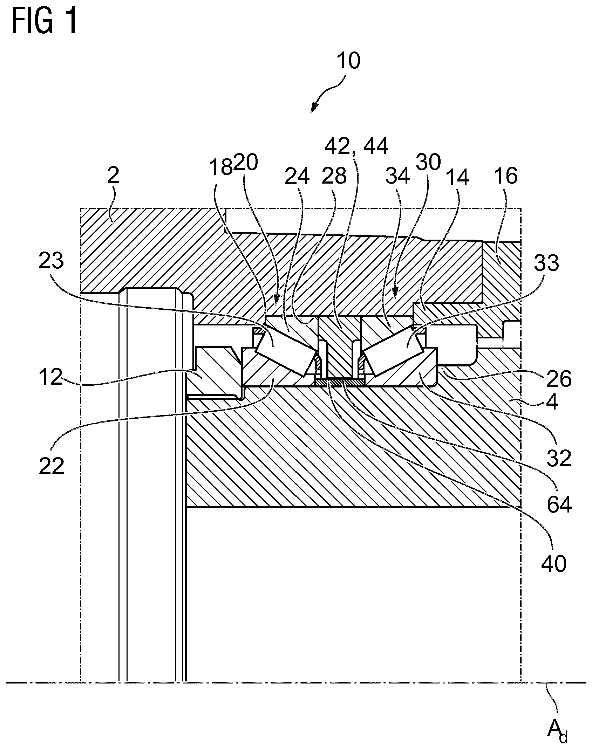

In Figur 1 ist schematisch eine Ausführungsform einer beanspruchten Lageranordnung 10 in einem montierten Zustand dargestellt. Die Lageranordnung 10 weist ein erstes Wälzlager 20 und ein zweites Wälzlager 30 auf. Die Lageranordnung 10 ist in einem Gehäuse 2 angeordnet. Über die Lageranordnung 10 ist eine Welle 4 um eine Drehachse A_{d} drehbar in dem Gehäuse 2 gehalten. Die Welle 4 ist vorliegend als Hohlwelle ausgebildet. Der Zusammenbau aus Gehäuse 2, Welle 4, Lageranordnung 10 und weiterer Bauteile kann als Hohlwellenbaugruppe bezeichnet werden. Wie noch im weiteren Verlauf beschrieben wird, kann die Hohlwellenbaugruppe ein Getriebe mit einem Generator antriebsmäßig verbinden.

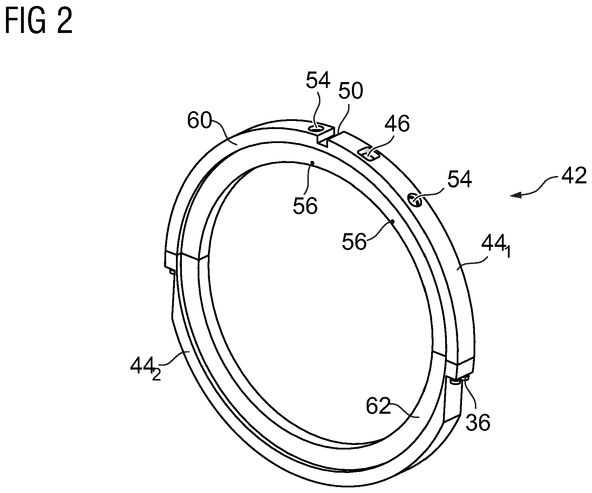

Das erste Wälzlager 20 umfasst einen Innenring 22, einen Außenring 24 und dazwischen angeordnete Wälzkörper 23. Korrespondierend hierzu umfasst auch das zweite Wälzlager 30 einen Innenring 32, einen Außenring 34 und dazwischen angeordnete Wälzkörper 33. Das erste und zweite Wälzlager 20, 30 sind in O-Anordnung zueinander angeordnet. Beim ersten und zweiten Wälzlager 20, 30 dient der jeweilige Außenring 24, 34 als stationäres Bauteil, da sie im montierten Zustand drehfest im Gehäuse 2 gehalten sind. Korrespondierend dazu stellen die Innenringe 22, 32 des ersten und zweiten Wälzlagers 20, 30 jeweils rotierende Bauteile dar. Zwischen den Innenringen 22, 32 der beiden Wälzlager 20, 30 sitzt ein erstes Distanzelement 40 ein und zwischen den Außenringen 24, 34 der beiden Wälzlager 20, 30 sitzt ein zweites Distanzelement 42 ein. Über das erste Distanzelement 40 werden die beiden Innenringe 22, 32 axial beabstandet gehalten und über das zweite Distanzelement 42 werden die beiden Außenringe 24, 34 axial beabstandet gehalten. Beide Distanzelemente 40, 42 sind ringförmig ausgeführt, wobei insbesondere das innere und erste Distanzelement 40 die Welle 4 hülsenförmig umgibt. Das zweite Distanzelement 42 kann beispielsweise aus zwei Bogenstücken 44 zusammengesetzt sein, wie anhand der Figur 2 erläutert wird.

Die beiden Innenringe 22, 32 der Wälzlager 20, 30 sitzen mit einer Übergangspassung auf der Welle 4. Hierdurch sind die Innenringe 22, 32 zunächst gegen eine Relativdrehung gegenüber der Welle 4 gehalten. Zur weiteren Sicherung gegen eine Relativdrehung zwischen Innenringe 22, 32 und Welle 4 ist endseitig auf die Welle 4 eine Nutmutter 12 geschraubt, die beide Innenringe 22, 32 und das einsitzende erste Distanzelement 40 mit einer Axialkraft gegen eine Wellenschulter 26 beaufschlagt. In einem montierten Zustand der Lageranordnung auf der Welle 4 und in dem Gehäuse 2 sitzen die beiden Außenringe 24, 34 der Wälzlager 20, 30 ebenfalls mit einem Übermaß in einer Aufnahmebohrung 28 des Gehäuses 2. Über einen Einstellring 14 und einen Gehäusedeckel 16 wird eine Axialkraft aufgebracht, die die beiden Außenringe 24, 34 und das einsitzende zweite Distanzelement 42 gegen eine Gehäuseschulter 18 beaufschlagt. Hierdurch ist zunächst eine Sicherung gegen eine Relativdrehung zwischen Außenringen 24, 34 und dem Gehäuse 2 gegeben. Eine weitere Möglichkeit der Sicherung gegen eine Relativdrehung wird im Zusammenhang mit dem zweiten Distanzelement 42 im weiteren Verlauf beschrieben.

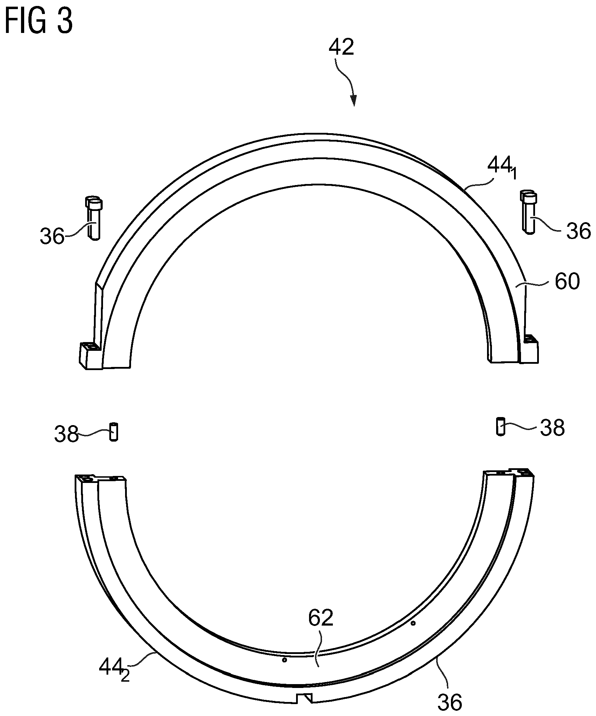

In den Figuren 2 und 3 ist das zweite Distanzelement 42 als Detaillierung in unterschiedlichen perspektivischen Darstellungen gezeigt, auf die im Folgenden im Wesentlich gemeinsam Bezug genommen wird. Das zweite Distanzelement 42 ist vorliegend in einer zweiteiligen Ausführung gezeigt. Das Distanzelement 42 besteht dann aus zwei umfänglich gegeneinandergesetzten Bogenstücken 44₁, 44₂. Die beiden gegeneinandergesetzten Bogenstücke 44₁, 44₂ bilden einen umfänglich geschlossenen Ring.

Die zwei umfänglichen Bogenstücken 44₁, 44₂ sind über Schrauben 36 gegeneinander verschraubt und zusätzlich über Passstifte 38 gegeneinander positioniert.

Das zweite Distanzelement 42 kann in einem Längsschnitt betrachtet im Wesentlichen T-förmig ausgebildet sein, wie insbesondere in der Figur 1 zu erkennen ist. Die T-Form wird durch einen radial äußeren Distanzkörper 60 und einem von diesem nach radial innen sich fortsetzenden Steg 62 gebildet. Der Distanzkörper 60 findet seine Funktion darin, axial zwischen den Außenringen 24, 34 der Lager 20, 30 einzusitzen und die Außenringe 24, 34 in einem definierten axialen Abstand zu halten. Durch den Steg 62 setzt sich das zweite Distanzelement 42 nach radial innen zwischen den Wälzkörpern 23, 33 der Lager 20, 30 fort. Bevorzugt setzt sich das zweite Distanzelement 42 so weit nach radial innen bis zu dem ersten Distanzelement 40 fort, so dass beide Distanzelemente 40, 42 zueinander einen schmalen radialen Spalt 64 bilden. Das radiale Maß des Spalts 64 kann vorliegend je nach Anwendung variieren.

Das radiale Maß des Spalts 64 kann beispielsweise größer gewählt werden, wenn ausgehend von dem radial inneren Bereich des Distanzelements 42 eine Schmierung der Wälzkörper 23, 33 der Lager 20, 30 vorgesehen sein soll. Bei einer derartigen Ausführung ist in dem zweiten Distanzelement 42 zumindest ein in radialer Richtung verlaufender Ölversorgungskanal 54 mit beidseitig axial gerichteten Ölaustrittsbohrungen 56 angeordnet. Die Figur 2 lässt erkennen, dass zwei Ölversorgungskanäle 54 über den Umfang angeordnet sind. Über die axial gerichteten Ölaustrittsbohrungen 56 kann Schmieröl zu den Wälzkörpern 23, 33 geleitet werden. Alternativ kann auch nur ein Ölversorgungskanal 54 vorgesehen sein.

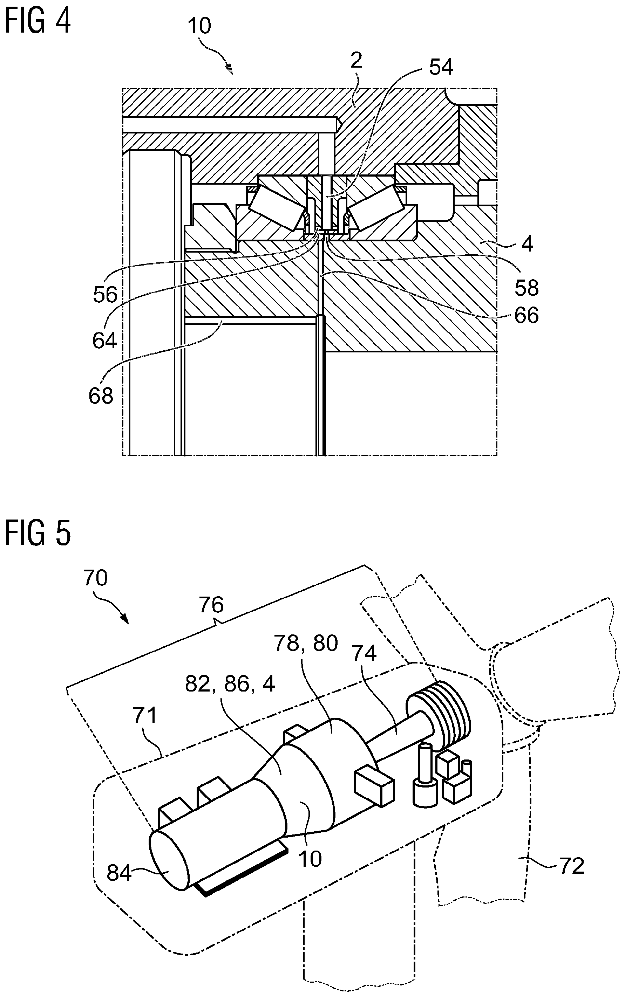

Das radiale Maß des Spalts 64 kann beispielsweise kleiner gewählt werden, wenn zusätzlich vorgesehen sein soll, dass der oder die Ölversorgungskanäle 54 eine sich nach radial innen fortsetzende Öldurchgangsbohrung 58 aufweisen, worauf noch im Zusammenhang mit der Figur 4 eingegangen wird.

Das zweite Distanzelement 42 bildet außenumfänglich eine erste Nut 46 aus. Über eine hierin aufgenommene Passfeder (nicht dargestellt) kann das zweite Distanzelement 42 formschlüssig gegen Drehungen gegenüber dem Gehäuse 2 gesichert sein. Zudem bildet das zweite Distanzelement 42 außenumfänglich eine zweite Passfedernut 50 aus. Über eine hierin aufgenommen Passfeder (nicht dargestellt) kann das zweite Distanzelement 42 formschlüssig gegen Drehungen gegenüber zumindest einem der Außenringe 24, 34 gesichert sein.

Anhand der Figur 4 wird die mögliche Ölversorgung durch das zweite Distanzelement 42 anhand eines Zusammenbaus gezeigt. Das Zusammenwirken des ersten Distanzelements 40 mit dem zweiten Distanzelement 42 zeichnet sich durch einen Spalt 64 mit einem geringen radialen Maß aus. Zunächst zweigen von dem Ölversorgungskanal 54 beidseitig axial gerichtete Ölaustrittsbohrungen 56 ab, um die Wälzkörper 23, 33 zu beölen. Zusätzlich ist vorgesehen, dass der Ölversorgungskanal 54 eine sich nach radial innen und durch das erste Distanzelement 40 fortsetzende Öldurchgangsbohrung 58 aufweist. Korrespondierend zu der Öldurchgangsbohrung 58 ist in der Welle 4 ein radialer Ölkanal 66 ausgebildet, über den Schmieröl beispielsweise zu einer Längsverzahnung 68 an einem Innenumfang der Welle 4 gelangen kann.

Die vorliegende Lageranordnung 10 wird mit einer axialen Vorspannung zwischen dem Gehäuse 2 und der Welle 4 montiert. Das hierbei zur Anwendung kommende Montageverfahren teilt sich in einen ersten Schritt der vorläufigen Montage einschließlich Axialspielmessung und einen zweiten Schritt der endgültigen Montage mit Einstellung der zu erzielenden Vorspannung auf. Zunächst werden beiden Wälzlager 20, 30 im Verbund mit den ersten und zweiten axial einsitzenden Distanzelementen 40, 42 auf der Welle 4 aufgesetzt. Die Innenringe 22, 32 der Wälzlager 20, 30 haben bevorzugt eine Übergangspassung bezüglich des Durchmessers der Welle 4. Anschließend wird die Welle 4 mit den aufgesetzten Wälzlägern 20, 30 in die Aufnahmebohrung 28 des Gehäuses 2 eingeschoben. Hiermit ist die vorläufige Montage erfolgt. Für diese vorläufige Montage ist ein zweites Distanzelement vorgesehen, dessen axiales Breitenmaß derart bemessen ist, dass die vorläufig montierte Lageranordnung 10 ein axiales Spiel der Welle 4 gegenüber dem Gehäuse 2 zulässt. Dieses axiale Spiel wird bestimmt bzw. mit entsprechenden Messmitteln gemessen. Im Anschluss wird die Welle 4 zusammen mit den auf ihr gehaltenen Wälzlagern 20, 30 und Distanzelementen 40, 42 aus der Aufnahmebohrung 28 des Gehäuses 2 herausgezogen und das zumindest zweiteilige zweite Distanzelement 42 zwischen den beiden Wälzlagern 20, 30 entfernt. Infolge der Mehrteiligkeit des zweiten Distanzelements 42 können beiden Wälzlager 20, 30 in ihrer Position unverändert auf der Welle 2 verbleiben, da die Bogenstücke 44 des Distanzelements 42 zwischen den Wälzlagern 20, 30 entnommen werden können. Im Anschluss hieran erfolgt die endgültige Montage der Lageranordnung 10, wobei ein zweites Distanzelement 42 mit einem gegenüber der vorläufigen Montage erhöhten axialen Breitenmaß eingesetzt wird. Dieses erhöhte axiale Breitenmaß setzt sich aus dem axialen Breitenmaß des Distanzelements 42 der vorläufigen Montage und dem bestimmten Maß des Axialspiels zusammen.

In der Figur 5 ist eine Ausführungsform einer Windkraftanlage 70 dargestellt. Die Windkraftanlage 70 umfasst eine Gondel 71, an der drehbar ein Mehrblattrotor 72 angebracht ist. Der Mehrblattrotor 72 ist mit einer Hauptwelle 74 drehmomentübertragend verbunden, wobei die Hauptwelle 74 zu einem Antriebsstrang 76 gehört. Der Antriebsstrang 76 umfasst ferner ein Getriebe 78, das drehmomentübertragend mit der Hauptwelle 74 verbunden ist. Das Getriebe 78 weist zumindest eine Planetenstufe 80 auf und ist wiederum über eine Hohlwellenbaugruppe 82 mit einem Generator 84 gekoppelt. Die Hohlwellenbaugruppe 82 ist in einen sich verjüngenden Gehäuseabschnitt 86 des Getriebes 78 aufgenommen. Der Gehäuseabschnitt 86 kann als eigenständiges Gehäuse 2 gestaltet sein. In der Hohlwellenbaugruppe 82 ist eine Lageranordnung 10 vorgesehen ist. Die Lageranordnung 10 ist gemäß einer der oben beschriebenen Ausführungsformen ausgebildet. Die Lageranordnung 10 ist in einem Computerprogrammprodukt abgebildet, das dazu geeignet ist, deren Betriebsverhalten während eines Betriebs der Windkraftanlage 70 zu simulieren.

### Bezugszeichenliste

- 2: Gehäuse
- 4: Welle
- 10: Lageranordnung
- 12: Nutmutter
- 14: Einstellring
- 16: Gehäusedeckel
- 18: Gehäuseschulter
- 20: Wälzlager
- 22: Innenring
- 23: Wälzkörper
- 24: Außenring
- 26: Wellenschulter
- 28: Aufnahmebohrung
- 30: Wälzlager
- 32: Innenring
- 33: Wälzkörper
- 34: Außenring
- 36: Schraube
- 38: Passstift
- 40: Distanzelement
- 42: Distanzelement
- 44: Bogenstücke
- 46: Nut
- 50: Passfedernut
- 54: Ölversorgungskanal
- 56: Ölaustrittsbohrung
- 58: Öldurchgangsbohrung
- 60: Distanzkörper
- 62: Steg
- 64: Radialspalt
- 66: Ölkanal
- 68: Längsverzahnung
- 70: Windkraftanlage
- 71: Gondel
- 72: Mehrblattrotor
- 74: Hauptwelle
- 76: Antriebsstrang
- 78: Getriebe
- 80: Planetenstufe
- 82: Hohlwellenbaugruppe
- 84: Generator
- 86: Gehäuseabschnitt

## Patentansprüche

1. Lageranordnung (10), umfassend
ein erstes Wälzlager (20) mit einem Innenring (22) und einem Außenring (24),
ein zweites Wälzlager (30) mit einem Innenring (32) und einem Außenring (34),
ein zwischen den Innenringen (22, 32) der Wälzlager (20, 30) einsitzendes erstes Distanzelement (40) und
ein zur Einstellung einer Lagervorspannung zwischen den Außenringen (24, 34) der Wälzlager (20, 30) einsitzendes und aus zumindest zwei umfänglich gegeneinandergesetzten Bogenstücken (44₁, 44₂) bestehendes zweites Distanzelement (42),
**dadurch gekennzeichnet, dass** sich das zweite Distanzelement (42) unter Bildung eines Radialspaltes (64) zu dem ersten Distanzelement (40) in radialer Richtung erstreckt und in dem ersten und zweiten Distanzelement (40, 42) ein in radialer Richtung verlaufender Ölversorgungskanal (54, 58) gebildet ist.

2. Lageranordnung (10) nach Anspruch 1, **dadurch gekennzeichnet, dass** das zweite Distanzelement (42) außenumfänglich eine erste Nut (46) ausbildet, zur Aufnahme eines mit einem umgebenden Gehäuse verbundenen Sicherungselements.

3. Lageranordnung (10) nach Anspruch 1 oder 2, **dadurch gekennzeichnet, dass** das zweite Distanzelement (42) außenumfänglich eine zweite Passfedernut (50) ausbildet, zur Aufnahme einer mit zumindest einem der Außenringe (24, 34) formschlüssig verbundenen Passfeder.

4. Lageranordnung (10) nach einem der Ansprüche 1 bis 3, **dadurch gekennzeichnet, dass** der in radialer Richtung verlaufende Ölversorgungskanal (54) zumindest eine Ölaustrittsbohrung (56) aufweist.

5. Lageranordnung (10) nach Anspruch 4, **dadurch gekennzeichnet, dass** der Ölversorgungskanal (54) des zweiten Distanzelementes (42) zwei beidseitig axial gerichtete Ölaustrittsbohrungen (56) aufweist.

6. Lageranordnung (10) nach einem der Ansprüche 1 bis 5, **dadurch gekennzeichnet, dass** der Radialspalt (64) ein derart geringes radiales Maß aufweist, dass in einem Betrieb der Lageranordnung (10) der Radialspalt (64) im Wesentlichen abdichtend zwischen den beiden Distanzelementen (40, 42) wirkt.

7. Lageranordnung (10) nach Anspruch 6, **dadurch gekennzeichnet, dass** das radiale Maß des Radialspaltes (64) zwischen 0,1mm und 1mm, bevorzugt zwischen 0,1mm und 0,3mm, beträgt.

8. Lageranordnung (10) nach einem der Ansprüche 1 bis 7, **dadurch gekennzeichnet, dass** die zumindest zwei umfänglichen Bogenstücken (44₁, 44₂) gegeneinander verschraubt und/oder über Passstifte (38) verbunden sind.

9. Lageranordnung (10) nach einem der Ansprüche 1 bis 8, **dadurch gekennzeichnet, dass** das erste und/oder zweite Wälzlager (20, 30) als Axial-Kegelrollenlager, als Kegelrollenlager, als Schrägkugellager, oder als Axial-Pendelrollenlager ausgebildet ist.

10. Lageranordnung (10) nach einem der Ansprüche 1 bis 9, **dadurch gekennzeichnet, dass** das erste und das zweite Wälzlager (20, 30) in einer O-Anordnung zueinander angeordnet sind.

11. Verfahren zur Montage einer Lageranordnung (10) nach einem der vorangegangenen Ansprüche zwischen einem Gehäuse (2) und einer Welle (4), bei dem eine vorläufige Montage der mit der Lageranordnung (10) bestückten Welle (4) innerhalb des Gehäuses (2) oder einer das Gehäuse (2) repräsentierenden Vorrichtung erfolgt,
ein Maß eines Axialspiels zwischen Gehäuse (2) oder der das Gehäuse (2) repräsentierenden Vorrichtung und Welle (4) bestimmt wird und
nach Demontage der Welle (4) aus dem Gehäuse (2) eine endgültige Montage der mit der Lageranordnung (10) bestückten Welle (4) innerhalb des Gehäuses (2) erfolgt,
wobei das zweite Distanzelement (42) der Lageranordnung (10) gegenüber der vorläufigen Montage ein zumindest um das bestimmte Maß des Axialspiels erhöhtes axiales Breitenmaß aufweist.

12. Verfahren nach dem vorangegangenen Anspruch, bei dem das Maß des Axialspiels abhängig von zumindest einem Toleranzmaß eines Gehäuseinnendurchmesser und/oder von einem Toleranzmaß eines Lageraußenringdurchmessers korrigiert wird.

13. Antriebsstrang (76) für eine Windkraftanlage, umfassend eine Wellenbaugruppe (82) zur drehmomentübertragenden Verbindung eines Mehrblattrotors (72) mit einem Generator (84),
wobei die Wellenbaugruppe (82) ein Gehäuse (2) und eine in dem Gehäuse (2) drehbar gelagerte Welle (4) aufweist und die Welle (4) über eine Lageranordnung (10) nach einem der Ansprüche 1 bis 10 in dem Gehäuse (2) gelagert ist.

14. Windkraftanlage (70), umfassend eine Gondel (71), an der drehbar ein Mehrblattrotor (72) und ein Generator (84) angebracht sind, wobei der Mehrblattrotor (72) drehmomentübertragend über einen Antriebsstrang (76) mit dem Generator (84) verbunden ist und der Antriebsstrang (76) nach Anspruch 13 ausgebildet ist.

## Claims

1. Bearing arrangement (10), comprising
a first anti-friction bearing (20) with an inner ring (22) and an outer ring (24),
a second anti-friction bearing (30) with an inner ring (32) and an outer ring (34),
a first spacer element (40) which is seated between the inner rings (22, 32) of the anti-friction bearings (20, 30), and
a second spacer element (42) which, in order to adjust a bearing prestress, is seated between the outer rings (24, 34) of the anti-friction bearings (20, 30) and consists of at least two curved pieces (44₁, 44₂) which are adjusted circumferentially against one another,
**characterized in that** the second spacer element (42) extends in the radial direction with the formation of a radial gap (64) to the first spacer element (40), and an oil supply channel (54, 58) which runs in the radial direction is formed in the first and second spacer element (40, 42).

2. Bearing arrangement (10) according to Claim 1, **characterized in that** the second spacer element (42) configures a first groove (46) on the outer circumference, for receiving a securing element which is connected to a surrounding housing.

3. Bearing arrangement (10) according to Claim 1 or 2, **characterized in that** the second spacer element (42) configures a second keyway (50) on the outer circumference, for receiving a key which is connected in a positively locking manner to at least one of the outer rings (24, 34).

4. Bearing arrangement (10) according to one of Claims 1 to 3, **characterized in that** the oil supply channel (54) which runs in the radial direction has at least one oil outlet bore (56).

5. Bearing arrangement (10) according to Claim 4, **characterized in that** the oil supply channel (54) of the second spacer element (42) has two oil outlet bores (56) which are directed axially on both sides.

6. Bearing arrangement (10) according to one of Claims 1 to 5, **characterized in that** the radial gap (64) has a small radial dimension such that, in operation of the bearing arrangement (10), the radial gap (64) has a substantially sealing effect between the two spacer elements (40, 42).

7. Bearing arrangement (10) according to Claim 6, **characterized in that** the radial dimension of the radial gap (64) is between 0.1 mm and 1 mm, preferably between 0.1 mm and 0.3 mm.

8. Bearing arrangement (10) according to one of Claims 1 to 7, **characterized in that** the at least two circumferential curved pieces (44₁, 44₂) are screwed against one another and/or are connected via locating pins (38).

9. Bearing arrangement (10) according to one of Claims 1 to 8, **characterized in that** the first and/or second anti-friction bearing (20, 30) are/is configured as an axial tapered roller bearing, as a tapered roller bearing, as an angular contact ball bearing, or as an axial self-aligning roller bearing.

10. Bearing arrangement (10) according to one of Claims 1 to 9, **characterized in that** the first and the second anti-friction bearings (20, 30) are arranged in an O-arrangement with respect to one another.

11. Method for mounting a bearing arrangement (10) according to one of the preceding claims between a housing (2) and a shaft (4), comprising the steps of
provisional mounting of the shaft (4) which is fitted with the bearing arrangement (10) takes place within the housing (2) or an apparatus which represents the housing (2),
a dimension of an axial play between the housing (2) or the apparatus which represents the housing (2) and the shaft (4) is determined, and,
after dismantling of the shaft (4) from the housing (2), final mounting of the shaft (4) which is fitted with the bearing arrangement (10) takes place within the housing (2),
wherein the second spacer element (42) of the bearing arrangement (10) comprises, with respect to the provisional mounting, an axial width dimension which is increased at least by the defined dimension of the axial play.

12. Method according to the preceding claim, wherein the dimension of the axial play is corrected in a manner which is dependent on at least one tolerance dimension of a housing internal diameter and/or on a tolerance dimension of a bearing outer ring diameter.

13. Drive train (76) for a wind power plant, comprising a shaft assembly (82) for the torque-transmitting connection of a multiple blade rotor (72) to a generator (84),
the shaft assembly (82) having a housing (2) and a shaft (4) which is mounted rotatably in the housing (2), and the shaft (4) being mounted in the housing (2) via a bearing arrangement (10) according to one of Claims 1 to 10.

14. Wind power plant (70), comprising a nacelle (71), to which a multiple blade rotor (72) and a generator (84) are attached rotatably, the multiple blade rotor (72) being connected in a torque-transmitting manner via a drive train (76) to the generator (84), and the drive train (76) being configured according to Claim 13.

## Revendications

1. Agencement de palier (10), comprenant
un premier palier à roulement (20) comportant une bague intérieure (22) et une bague extérieure (24),
un deuxième palier à roulement (30) comportant une bague intérieure (32) et une bague extérieure (34),
un premier élément d'écartement (40) logé entre les bagues intérieures (22, 32) des paliers à roulement (20, 30) et
un deuxième élément d'écartement (42) logé entre les bagues extérieures (24, 34) des paliers roulement (20, 30) pour régler une précontrainte de palier et constitué d'au moins deux pièces courbées (44₁, 44₂) disposées circonférentiellement l'une en face de l'autre,
**caractérisé en ce que** le deuxième élément d'écartement (42) s'étend dans la direction radiale en formant une fente radiale (64) par rapport au premier élément d'écartement (40) et un canal d'alimentation en huile (54, 58) s'étendant dans la direction radiale est formé dans le premier et le deuxième élément d'écartement (40, 42).

2. Agencement de palier (10) selon la revendication 1, **caractérisé en ce que** le deuxième élément d'écartement (42) forme, sur la périphérie extérieure, une première rainure (46) pour recevoir un élément de fixation relié à un carter environnant.

3. Agencement de palier (10) selon la revendication 1 ou 2, **caractérisé en ce que** le deuxième élément d'écartement (42) forme, sur la périphérie extérieure, une deuxième rainure de clavette (50) pour recevoir une clavette qui est reliée par complémentarité de forme à au moins une des bagues extérieures (24, 34).

4. Agencement de palier (10) selon l'une quelconque des revendications 1 à 3, **caractérisé en ce que** le canal d'alimentation en huile (54) s'étendant dans la direction radiale présente au moins un alésage de sortie d'huile (56).

5. Agencement de palier (10) selon la revendication 4, **caractérisé en ce que** le canal d'alimentation en huile (54) du deuxième élément d'écartement (42) présente deux alésages de sortie d'huile (56) orientés axialement des deux côtés.

6. Agencement de palier (10) selon l'une quelconque des revendications 1 à 5, **caractérisé en ce que** la fente radiale (64) présente une dimension radiale si petite que, lors d'un fonctionnement de l'agencement de palier (10), la fente radiale (64) agit sensiblement de manière étanche entre les deux éléments d'écartement (40, 42).

7. Agencement de palier (10) selon la revendication 6, **caractérisé en ce que** la dimension radiale de la fente radiale (64) est comprise entre 0,1 mm et 1 mm, de préférence entre 0,1 mm et 0,3 mm.

8. Agencement de palier (10) selon l'une quelconque des revendications 1 à 7, **caractérisé en ce que** les au moins deux pièces courbées de périphériques (44₁, 44₂) sont vissées l'une à l'autre et/ou reliées par des goupilles de positionnement (38).

9. Agencement de palier (10) selon l'une quelconque des revendications 1 à 8, **caractérisé en ce que** le premier et/ou le deuxième palier à roulement (20, 30) est réalisé sous la forme d'un palier à rouleaux coniques axiaux, d'un palier à rouleaux coniques, d'un palier à billes à contact angulaire ou d'un palier à rouleaux pendulaires axiaux.

10. Agencement de palier (10) selon l'une quelconque des revendications 1 à 9, **caractérisé en ce que** le premier et le deuxième palier à roulement (20, 30) sont disposés en O l'un par rapport à l'autre.

11. Procédé d'assemblage d'un agencement de palier (10) selon l'une quelconque des revendications précédentes entre un carter (2) et un arbre (4), dans lequel
un assemblage préliminaire de l'arbre (4) équipé de l'agencement de palier (10) est effectué à l'intérieur du carter (2) ou d'un dispositif représentant le carter (2),
une mesure d'un jeu axial entre le carter (2) ou le dispositif représentant le carter (2) et l'arbre (4) est déterminée et
une fois l'arbre (4) retiré du carter (2), l'arbre (4) équipé de l'agencement de palier (10) est finalement assemblé dans le carter (2), le deuxième élément d'écartement (42) de l'agencement de palier (10) présentant une largeur axiale qui est augmentée au moins de l'importance spécifique du jeu axial par rapport à l'assemblage préliminaire.

12. Procédé selon la revendication précédente, dans lequel la mesure du jeu axial est corrigée en fonction d'au moins une mesure de tolérance d'un diamètre intérieur de carter et/ou d'une mesure de tolérance d'un diamètre de bague extérieure de palier.

13. Chaîne cinématique (76) pour une éolienne, comprenant un ensemble arbre (82) pour la liaison de transmission de couple d'un rotor multipale (72) à un générateur (84),
l'ensemble arbre (82) présentant un carter (2) et un arbre (4) monté rotatif dans le carter (2), et l'arbre (4) étant monté dans le carter (2) par l'intermédiaire d'un agencement de palier (10) selon l'une quelconque des revendications 1 à 10.

14. Turbine éolienne (70), comprenant une nacelle (71) sur laquelle sont montés rotatifs un rotor à pales multiples (72) et un générateur (84), le rotor à pales multiples (72) étant relié au générateur (84) de manière à transmettre un couple par l'intermédiaire d'une chaîne cinématique (76), et la chaîne cinématique (76) étant réalisée selon la revendication 13.
